# EUROPEAN PATENT APPLICATION

(11) **EP 1 473 525 A2**
(43) Date of publication of application: **03.11.2004**
(21) Application number: 04460009.6
(22) Date of filing: 16.04.2004
(51) Int. Cl.: F25B 43/00, F16L 41/08, B23K 1/00

(54) **An accumulator dehydrator end cap and a method of assembling thereof**

(30) Priority: 28.04.2003 PL 35990203
(71) Applicant: Delphi Technologies, Inc., Troy, MI 48007 (US)
(72) Inventor: Krupa, Andrzej, 63-400 Ostrow Wielkopolski (PL); Filipiak, Marek, 63-400 Ostrow Wielkopolski (PL); Marciniak, Mariusz, 63-400 Ostrow Wielkopolski (PL)
(74) Representative: Lukaszyk, Szymon

(57) **Abstract**

The invention relates to an accumulator dehydrator end cap (1), comprising a cover (2) having a cylindrical side surface, and inlets and outlets for internal tubes and external connections and a method of assembling thereof. The end cap (1) comprises at least one fitting block (3) with holes for internal tubes and external connections. The cover (2) is in a form of an aluminium stamping with walls of uniform thickness and comprises at least one opening (5) for the fitting block (3), said opening ended with a flange (7) thus creating a circumferential capillary gap (10) for the braze (11), between the fitting block (3) and the cover (2). The fitting block (3) is preferably made with downstream extrusion method, inserted into said opening (5) and bonded with the cover (2) by means of a one shoot capillary brazing. The end cap (1) is inexpensive, light and resistant to high pressure in the accumulator dehydrator chamber and the method of its assembling makes it possible to produce caps adjusted to external connections of various types without the need of substantial modification of an assembling process.

## Description

The present invention relates to an end cap for an accumulator dehydrator of an air condition (A/C) systems and a method of assembling thereof.

In air condition systems accumulator dehydrator is usually placed between an evaporator and a compressor and protects the compressor from a possible damage by reducing velocity of vaporized fluid leaving the evaporator and by precipitating the water slugs from the cooling fluid.

Due to the necessity to connect the accumulator dehydrator unit to external pipes of A/C systems and to connect these pipes to internal tubes of the accumulator dehydrator, known end caps comprise a so called fitting block, a separated functional element, having an appropriate means, e.g. in a form of threaded holes that facilitate mounting the accumulator dehydrator in A/C system.

An example of such solution is an end cap produced by Neuman Aluminium GmbH, Austria. This end cap is a semi-finished part made by an upstream extrusion method. After precise machining it is welded together with a valve body, then tubes and a desiccant bag are placed inside the cap and the cap is welded together with accumulator dehydrator body. Such unit is easy in installation, however, employing technologically complicated method of upstream extrusion leads to a high cost of such end cap. On the other hand, the fact that the fitting block is at the same time the upper surface of the end cap, substantially increases the amount of material and the weight of the end cap. By using the separate valve body it is also necessary to perform two separate welding operations: welding a valve body to the end cap and welding the end cap to the accumulator dehydrator body.

Accordingly, it is an object of the present invention to provide an accumulator dehydrator end cap, comprising inlets and outlets for internal tubes and external connections, which is more economical and lighter than known end caps, resistant to high pressure in the accumulator dehydrator chamber and at the same time makes it possible to employ internal plastic tubes that are inexpensive and easy to install.

It is another object of the present invention to provide a method of assembling such an end cap, which is less complicated, comprises a small number of steps and makes it possible to produce caps adjusted to external connections of various types without the need of substantial modification of an assembling process.

An accumulator dehydrator end cap according to the invention comprises at least one fitting block with holes for internal tubes and external connections and the cover is in a form of an aluminium stamping with walls of uniform thickness and comprises at least one opening for the fitting block, said opening ended with a flange creating a circumferential capillary gap for the braze, between the fitting block and the cover, wherein the fitting block is bonded to the cover by the brazing.

Making a cover as an element having walls of uniform thickness allows its simple stamping from an aluminium sheet and greatly reduces the weight of the end cap with respect to the other caps of the similar type. The fitting block is an additional element made by relatively simple method of downstream extrusion and comprises an appropriate means, e.g. in a form of threaded holes and/or mounting grooves allowing an installation of the accumulator dehydrator unit in an air condition system.

The fitting block being the separate element of the cap also makes it possible to employ the accumulator dehydrator in another type of the air condition system, having another form of connections. To change the kind of the end cap during assembling process it is sufficient to employ a different type of the fitting block having the same dimensions as the previous one, but provided with another form of connections that correspond to the other type of the A/C system.

Preferably said cover is provided with spherical top surface.

The spherical top surface leads to the optimal stress distribution caused by the pressure in the accumulator dehydrator chamber which during its operation may exceed to 34 at.

Said cover is also preferably provided with the additional opening for the valve body. Said opening is also ended with a flange creating a circumferential capillary gap for the braze, between the valve body and the cover, wherein the valve body is bonded to the cover by the brazing.

It facilitates to employ the semi-finished parts, in particular the normalised valve body.

A method of assembling an accumulator dehydrator end cap according to the invention comprises steps of stamping from an aluminium sheet a cover with walls of uniform thickness with cutting at least one opening with a flange in the top surface of the cover for at least one fitting block; inserting the fitting block with holes for internal tubes and external connections into said opening to create the circumferential capillary gap between the fitting block and the cover; applying the braze into the capillary gap on line of contact between the flange and the outer side surface of the fitting block; and bonding the elements together by the one shoot capillary brazing.

The accumulator dehydrator according to the invention may be assembled by means of only a few typical, technological operations without the need to use the complicated equipment, devices or sophisticated know-how, which decreases the unit price of a complete accumulator dehydrator unit. Forming the cover from an uniform thickness aluminium sheet makes this element very light.

During the brazing the capillary gaps suck braze inside, thus creating the tough and uniform bond between the brazed elements.

Independently of the number of openings in the cover, the end cap may be always made by means of a single brazing operation, thus allowing a so called "one shot" production process, since there are no separate operations of bonding individual elements with the cover.

Use of the separate fitting block allows employing the internal plastic tubes in the accumulator dehydrator chamber. Furthermore the separate fitting block makes it possible to start the production of the other type of end caps that correspond to the other type of connections almost immediately. Exchanging the fitting block with a new one that fits the other type of connections is sufficient and there is no need to modify the other production parameters.

The fitting block is preferably made with downstream extrusion method.

The method according to the present invention may also comprise additional steps prior bonding elements together, said steps of cutting an additional opening with a flange for the valve body in the cover; inserting the valve body, into said opening to create the circumferential capillary gap between the valve body and the cover; and applying the braze into the capillary gap on line of contact between the flange and the outer side surface of the valve body.

The valve body is a normalised element and it is practically not related with the type of connections of the air condition system.

The capillary brazing is preferably performed with furnace or induction method. Alternatively the flame brazing may be used.

The invention is presented by way of example with reference to the figures of the drawings, on which:
Fig. 1 shows a top view of an accumulator dehydrator end cap,
Fig. 2 shows a side section along the line A-A from Fig. 1 of an accumulator dehydrator end cap with enlarged bonding detail,
Fig. 3 shows the cover alone in section along the line A-A from Fig. 1,
Fig. 4 shows a side half-section of an accumulator dehydrator end cap along the line B-B from Fig. 1 and
Fig. 5 shows another embodiment of an accumulator dehydrator end cap in perspective view.

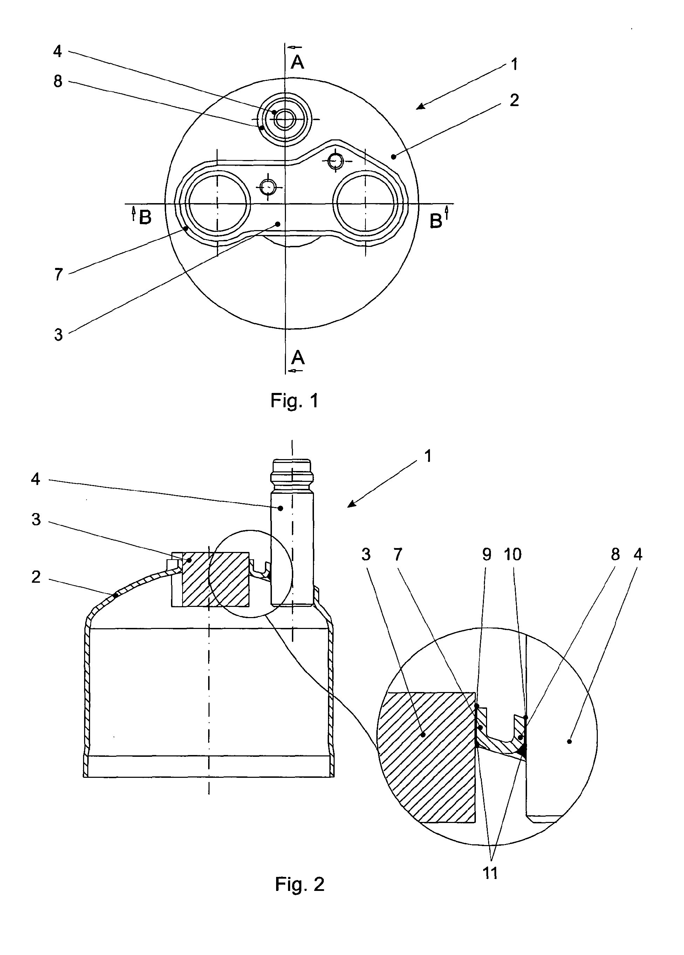

As shown in Fig. 1, Fig. 2, Fig. 3 and Fig. 4 an accumulator dehydrator end cap 1 comprises a stamped cover 2, double fitting block 3 and a valve body 4.

The fitting block 3 is a semi-finished part made as an extruded profile by a downstream extrusion method. It is cut to the appropriate height, machined and washed. The valve body 4 is a typical normalised element.

The stamped cover 2 has a cylindrical side surface and spherical top surface. It is made as an element of a uniform thickness from the aluminium sheet by an automatic stamping process.

The spherical shape of the cover 2 top surface increases the resistance of the end cap 1 for the internal pressure in the accumulator dehydrator chamber.

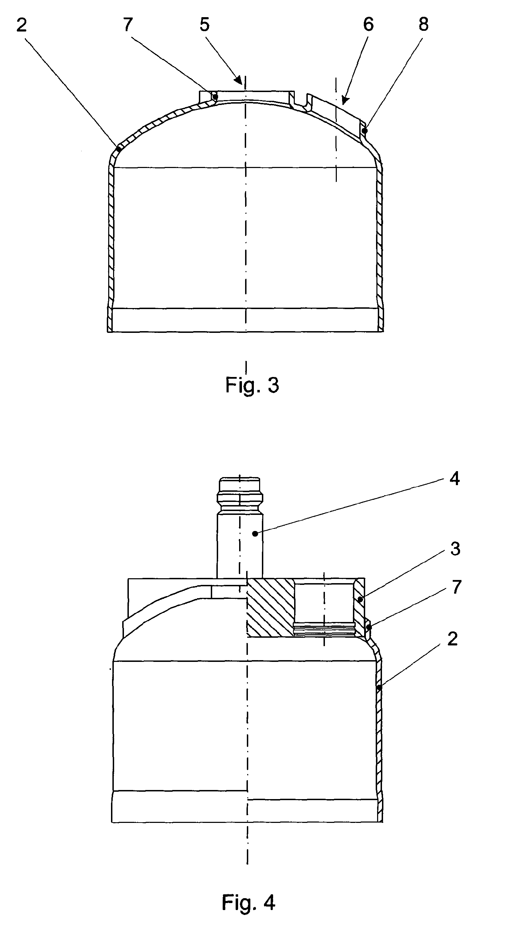

As shown in Fig. 3, the spherical top surface of the cover 2 is provided with an opening 5 for the fitting block 3 and additional opening 6 for the valve body 4. Both openings 5 and 6 are ended with flanges 7 and 8.

During assembling an accumulator dehydrator end cap, the fitting block 3 is inserted into opening 5 and the valve body 4 into the opening 6. The tolerance of these elements is selected so as to create the circumferential capillary gaps 9, 10 between the fitting block 3 and the cover 2 and between the valve body 4 and the cover 2.

Then the braze 11 is applied in few points to the gaps 9, 10 form the inner region of the cover 2 (see detail in Fig. 2).

The end cap so prepared is placed in furnace, where it is brazed in high temperatures. During this process capillary gaps 9, 10 suck in the braze 11, thus creating the tough and uniform bond.

Finally the appropriate internal plastic tubes and a desiccant bag are inserted into the end cap and the cap is welded to the accumulator dehydrator body (not shown on the drawing).

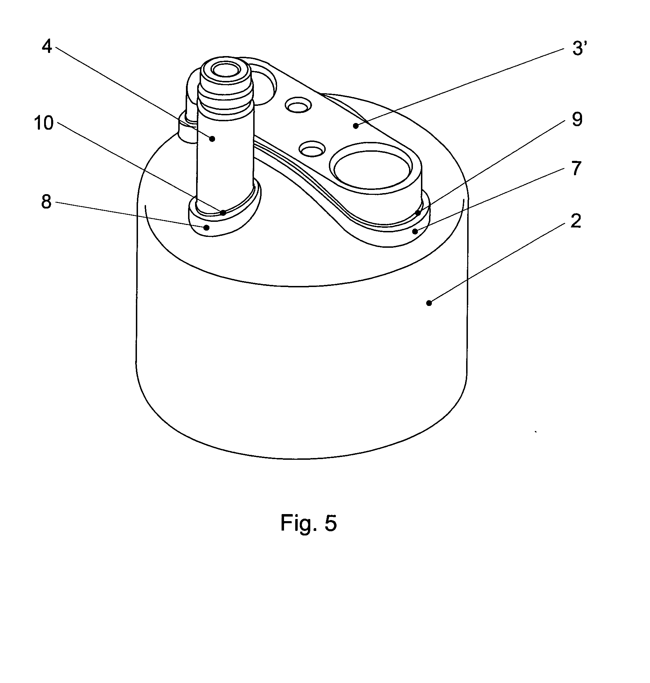

The fitting block 3' shown in Fig. 5 has a slightly different shape, due to another form of connections of the air condition loop.

It is to be understood that it is also possible to make a single opening in the cover, which at the same time supports the valve body 4. Alternatively two or more separate fitting blocks, one for each connection, may be used as well.

## Claims

1. An accumulator dehydrator end cap, comprising a cover having a cylindrical side surface, and inlets and outlets for internal tubes and external connections, **characterised in that**, said end cap comprises at least one fitting block (3) with holes for internal tubes and external connections and said cover (2) is in a form of an aluminium stamping with walls of uniform thickness and comprises at least one opening (5) for the fitting block (3), said opening ended with a flange (7) creating a circumferential capillary gap (9) for the braze (11), between the fitting block (3) and the cover (2), wherein the fitting block (3) is bonded to the cover (2) by brazing process.

2. An accumulator dehydrator end cap as claimed in claim 1, **characterised in that**, said cover (2) is provided with spherical top surface.

3. An accumulator dehydrator end cap as claimed in claim 1 or 2, **characterised in that**, said cover (2) is provided with the additional opening (6) for the valve body (4), said opening ended with a flange (8) creating a circumferential capillary gap (10) for the braze (11), between the valve body (4) and the cover (2), wherein the valve body (4) is bonded to the cover (2) by brazing process.

4. A method of assembling an accumulator dehydrator end cap, having a cover with a cylindrical side surface, and inlets and outlets for internal tubes and external connections, **characterised in that**, said method comprises steps of stamping from an aluminium sheet a cover with walls of uniform thickness with cutting at least one opening with a flange in the top surface of the cover for at least one fitting block; inserting the fitting block with holes for internal tubes and external connections into said opening to create the circumferential capillary gap between the fitting block and the cover; applying the braze into the capillary gap on line of contact between the flange and the outer side surface of the fitting block; and bonding the elements together by the one shoot capillary brazing.

5. A method of assembling an accumulator dehydrator end cap as claimed in claim 4, **characterised in that**, the fitting block is made by downstream extrusion method.

6. A method of assembling an accumulator dehydrator end cap as claimed in claim 4 or 5, **characterised in that**, said method comprises additional steps prior bonding elements together, said steps of cutting an additional opening (6) with a flange (8) for the valve body (4) in the cover (2); inserting the valve body (4), into said opening (6) to create the circumferential capillary gap (10) between the valve body (4) and the cover (2); and applying the braze (11) into the capillary gap (10) on line of contact between the flange (8) and the outer side surface of the valve body (4).

7. A method of assembling an accumulator dehydrator end cap as claimed in claim 4 or 5 or 6, **characterised in that**, the capillary brazing is performed with furnace brazing.

8. A method of assembling an accumulator dehydrator end cap as claimed in claim 4 or 5 or 6, **characterised in that**, the capillary brazing is performed with induction brazing.

9. A method of assembling an accumulator dehydrator end cap as claimed in claim 4 or 5 or 6, **characterised in that**, the capillary brazing is performed with flame brazing.
